# FASCICULE DE BREVET EUROPEEN

(11) **EP 3 795 417 B1**
(45) Date de publication et mention de la délivrance du brevet: **04.01.2023**
(21) Numéro de dépôt: 20196399.8
(22) Date de dépôt: 16.09.2020
(51) Int. Cl.: B60N 3/00, B60Q 3/233, B60N 2/90

(54) **SIÈGE D'UN VÉHICULE DE TRANSPORT ET VÉHICULE DE TRANSPORT ASSOCIÉ**
SITZ FÜR TRANSPORTFAHRZEUG UND ENTSPRECHENDES TRANSPORTFAHRZEUG
SEAT OF A TRANSPORT VEHICLE AND ASSOCIATED TRANSPORT VEHICLE

(30) Priorité: 18.09.2019 FR 1910285
(43) Date de publication de la demande: 24.03.2021
(73) Titulaire: SpeedInnov, 75008 Paris (FR)
(72) Inventeur: PAILLER, Christophe, 17180 PERIGNY (FR); BEAUSEIGNEUR, Christophe, 17540 VERINES (FR)
(74) Mandataire: Lavoix

(56) Documents cités:
- WO-A1-2018/190810
- DE-U1-202017 103 411
- FR-A1- 2 802 070
- US-A- 3 586 099

## Description

La présente invention concerne un siège d'un véhicule de transport selon le préambule de la revendication 1.

Un tel siège est connu dans l'état de la technique, par exemple dans US 3 586 099 A. Il fournit une surface de support horizontale, c'est-à-dire une table, sur laquelle un passager peut disposer des affaires personnelles et travailler, tout en donnant la possibilité de replier la table afin de libérer de l'espace pour faciliter le mouvement des passagers.

De tels sièges ne donnent cependant pas entière satisfaction. En effet, il est courant qu'un passager s'absente brièvement de son siège, par exemple pour aller aux toilettes, mais il est toutefois nécessaire que le passager emporte ses affaires personnelles avec lui, ces dernières risquant d'être volées si elles sont laissées sur le siège.

Un but de la présente invention est de fournir un siège qui puisse aider à réduire le risque de vol des biens des passagers.

A cet effet, l'invention a pour objet un siège du type précité et selon la partie caractérisante de la revendication 1.

Le siège selon l'invention peut comprendre l'une ou plusieurs des caractéristiques des revendication 2 à 7, prise(s) isolément ou suivant toute combinaison techniquement possible.

L'invention a également pour objet un véhicule de transport selon la revendication 8.

L'invention sera mieux comprise à la lecture de la description qui va suivre, donnée uniquement à titre d'exemple, et faite en se référant aux dessins annexés, sur lesquels :
[Fig 1] la Figure 1 est une vue en perspective du dossier d'un siège selon l'invention, la table étant dans sa position déployée ;
[Fig 2] la Figure 2 est une vue similaire à la Figure 1, la table étant dans sa position repliée ;
[Fig 3] la Figure 3 est une vue similaire à la Figure 1, la table illustrée étant selon une variante de l'invention.

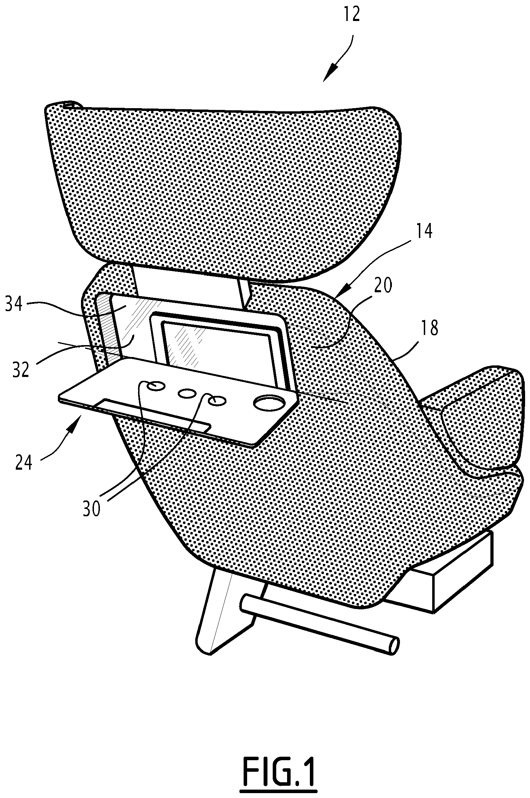

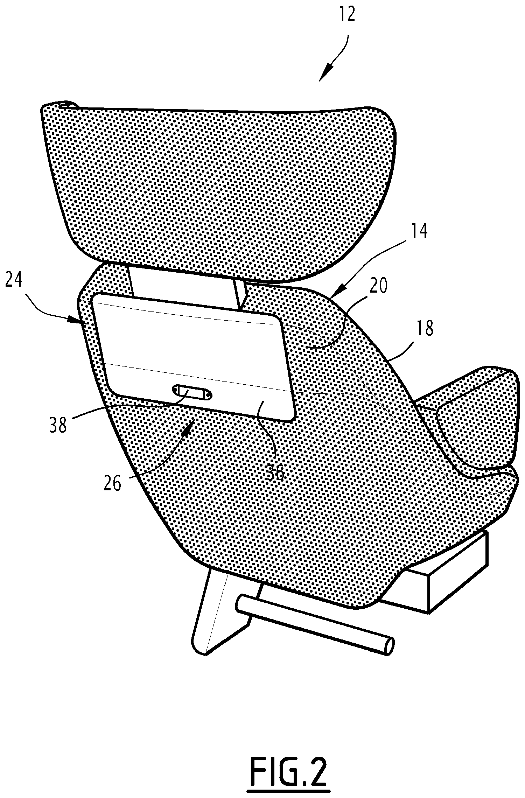

Les Figures 1 et 2 représentent un siège 12 d'un véhicule de transport. Le véhicule de transport est notamment un véhicule de transport en commun, par exemple un véhicule de transport ferroviaire. En variante, le véhicule de transport est un bus ou un navire.

Le siège 12 comporte un dossier 14 et une assise (non-représentée sur les Figures). Le dossier 14 définit une première surface 18 destinée à recevoir le dos d'un premier passager et une deuxième surface 20 opposée à la première surface 18. La deuxième surface 20 du dossier 14 est typiquement orientée vers un deuxième passager, assis derrière ledit premier passager.

Le dossier 14 comprend, du côté de la deuxième surface du dossier, une table pliable 24 et un dispositif de verrouillage 26.

Avantageusement, le dossier 14 et plus précisément la table pliable comprend en outre un dispositif 30 de commande d'un éclairage associé au siège, notamment situé en partie supérieure de la cavité.

En variante, le dossier comprend un dispositif de commande d'un éclairage situé en partie supérieur de la cavité 34, le dispositif de commande étant propre à commander l'activation de l'éclairage lorsque la table est en position déployée et la désactivation de l'éclairage lorsque la table est en position repliée. Le dispositif de commande étant par exemple un interrupteur propre à coopérer avec une paroi de la cavité 34 pour passer de la position ON, dans laquelle l'éclairage est activé, dans la position déployée, à la position OFF dans laquelle l'éclairage est désactivé lorsque la table est repliée et obstrue l'accès à la cavité.

La deuxième surface 20 comprend une ouverture 32 d'accès à au moins une cavité 34 ménagée entre la première surface 18 et la deuxième surface 20 du dossier 14.

En particulier, l'ouverture 32 permet l'accès à un espace formé entre la première surface 18 et la deuxième surface 20, cet espace formant la cavité 34. Cette ouverture 32 est de préférence sensiblement rectangulaire.

La cavité 34 est par ailleurs délimitée latéralement par deux parois latérales s'étendant entre la première surface 18 et la deuxième surface 20, verticalement par au moins une paroi de fond et une paroi supérieure s'étendant entre la première surface 18 et la deuxième surface 20.

La cavité 34 présente un volume supérieur à d'environ hauteur 350 mm x largeur 300 mm x profondeur 40 mm. Ainsi, la cavité 34 est particulièrement adaptée pour recevoir des affaires personnelles, telles qu'une tablette, un livre, ou un ordinateur portable.

L'ouverture 32 d'accès à la cavité 34 est dimensionnée pour recevoir la table 24, comme il sera décrit ci-dessous.

Avantageusement et en référence à la Figure 2, la deuxième surface 20 est munie d'un cadre 36 disposé en-dessous de l'ouverture 32, i.e. en-dessous de la cavité 34.

La table 24 est déplaçable entre une position repliée et une position déployée. Lorsque la table 24 est dans la position repliée, la table 24 obture l'accès à la cavité 34. Lorsque la table 24 est dans la position déployée, l'accès à la cavité 34 est libre.

La table 24 présente une surface supérieure ou sensiblement égale à la surface délimitée par l'ouverture 32. Ainsi, lorsque la table 24 est dans la position repliée, elle obture totalement l'ouverture et donc l'accès à la cavité 34.

Avantageusement, la surface de la table 24 est inférieure ou égale à 110% de la surface délimitée par l'ouverture 32.

La table 24 présente un angle par exemple supérieur à 45°, avantageusement supérieur à 75°, et de préférence sensiblement égale à 90° entre ses positions repliée et déployée.

Le dispositif de verrouillage 26 est opérable entre une configuration verrouillée et une configuration déverrouillée. Le dispositif de verrouillage 26 est configuré pour, dans la configuration verrouillée, maintenir la table 24 dans sa position repliée en empêchant tout déplacement de la table 24 vers sa position déployée. Le dispositif de verrouillage 26 est configuré pour, dans la configuration déverrouillée, autoriser un déplacement de la table 24 vers sa position déployée.

Avantageusement, le dispositif de verrouillage 26 comprend un verrou numérique 38, actionnable pour opérer le dispositif de verrouillage 26 entre la configuration verrouillée et la configuration déverrouillée.

Avantageusement, le verrou numérique 38 est actionnable par un code numérique alloué à un passager correspondant. Ainsi, la position de la table 24 entre ses positions repliée et déployée n'est changeable que par un passager spécifique. Ceci assure que seul le passager installé sur le siège en face de la deuxième surface 20 peut accéder à la cavité 34 et donc qu'il peut stocker ses affaires personnelles en sécurité dans la cavité 34. Le code numérique alloué est par exemple imprimé sur le billet du passager correspondant.

Selon le mode de réalisation représenté sur la Figure 2, le verrou numérique 38 est disposé sur le cadre 36. Ainsi, lorsque la table 24 est dans la position déployée, la partie supérieure de la cavité 34 est accessible à un passager. Cette configuration permet de faciliter la disposition et la récupération des affaires personnelles dans la cavité 34.

Le dispositif de commande d'éclairage 30 lorsqu'il est présent est configuré pour être accessible lorsque la table 24 se déplace de sa position repliée vers sa position déployée afin que le passager commande un éclairage situé en partie supérieure de la cavité 34, tandis que le dispositif d'éclairage lorsqu'il est présent est configuré pour s'allumer lorsque la table 24 se déplace de sa position repliée vers sa position déployée.

Grâce à l'invention décrite ci-dessus, le passager peut assurer la sécurité de ses affaires personnelles sans risque de vol en les disposant dans la cavité 34 puis verrouillant la table 24 dans la position repliée via le dispositif de verrouillage 26, même si le passager s'absente temporairement de son siège 12.

Selon une variante de l'invention, la table 24 comprend une première partie 40 et une deuxième partie 42. La première partie 40 est montée articulée sur la deuxième surface 20 du dossier 14. La première partie 40 est montée mobile en rotation selon un premier axe A-A' par rapport à la deuxième surface 20. Le premier axe A-A' est par exemple sensiblement horizontal ou sensiblement vertical.

La deuxième partie 42 est montée articulée sur la première partie 40. La deuxième partie 42 est montée mobile en rotation par rapport à la première partie 40, selon un deuxième axe B-B' parallèle au premier axe A-A'.

La deuxième partie 42 définit une première face 44 et une deuxième face 46 opposée à la première face 44. La deuxième partie 44 est mobile en rotation entre une position dépliée, dans laquelle la première face 44 présente un angle sensiblement égal à 180° avec la première partie 40, et une position repliée, dans laquelle la première face 44 est en contact direct avec la première partie 40.

La réalisation de la table 24 en deux parties articulées permet de disposer d'une surface de travail plus importante (dans la position dépliée de la deuxième partie) que celle imposée par la dimension de l'ouverture 32 délimitant la cavité 34.

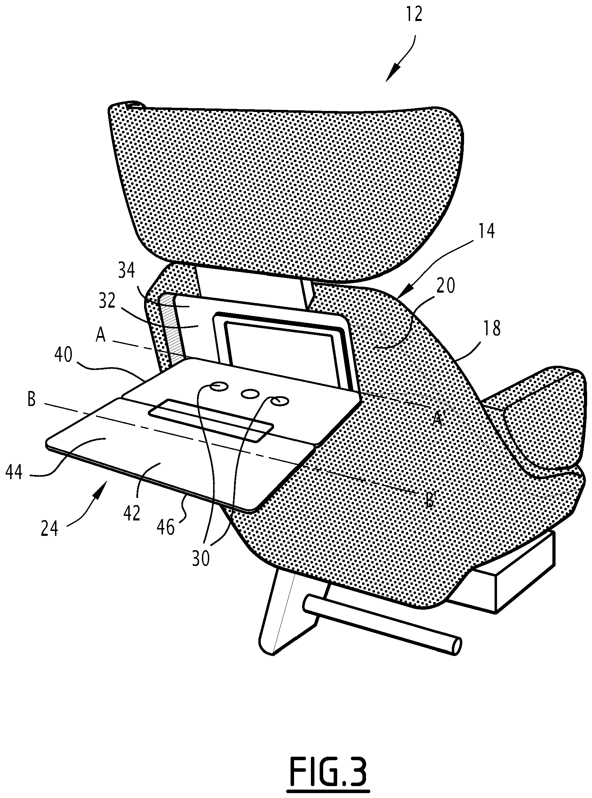

Selon la configuration illustrée sur la Figure 3, lorsque la table 24 est dans la position déployée et la deuxième partie 44 est dans la position dépliée, la première face 44 de la deuxième partie 42 est orientée vers le haut et est destinée à recevoir des objets de passagers. La deuxième face 46 de la deuxième partie 42 est alors orientée vers le bas.

Lorsque la table 24 est dans la position déployée et la deuxième partie 44 est dans la position repliée, la deuxième face 46 de la deuxième partie 42 est orientée vers le haut. Ainsi, dans cette configuration la deuxième face 42 peut continuer à recevoir des objets personnels de passagers tout en diminuant la surface totale de la table 24.

## Revendications

1. Siège (12) d'un véhicule de transport, comportant un dossier (14) définissant une première surface (18) destinée à recevoir le dos d'un passager et une deuxième surface (20) opposée à la première surface (18), la deuxième surface (20) comprenant une ouverture (32) d'accès à au moins une cavité (34) ménagée entre la première surface (18) et la deuxième surface (20),
le dossier (14) comprenant une table (24) déplaçable entre une position repliée dans laquelle la table (24) obture l'ouverture (32) d'accès à la cavité (34), et une position déployée dans laquelle l'ouverture (32) d'accès à la cavité (34) est libre,
le dossier (14) comprenant un dispositif de verrouillage (26) opérable entre une configuration verrouillée et une configuration déverrouillée, le dispositif de verrouillage (26) étant configuré pour, dans la configuration verrouillée, maintenir la table (24) dans sa position repliée en empêchant tout déplacement de la table (24) vers sa position déployée, et, dans la configuration déverrouillée, autoriser un déplacement de la table (24) vers sa position déployée,
le dispositif de verrouillage (26) comprenant un verrou actionnable pour opérer le dispositif de verrouillage (26) entre la configuration verrouillée et la configuration déverrouillée,
**caractérisé en ce que** le verrou est un verrou numérique (38), actionnable par un code numérique alloué à un passager correspondant,
la deuxième surface (20) comprenant un cadre (36) disposé sous l'ouverture (32), le verrou numérique (38) étant disposé sur le cadre (36).

2. Siège (12) d'un véhicule de transport selon la revendication 1, dans lequel la cavité (34) présente un volume supérieur à 150 mm x 100 mm x 15 mm de préférence supérieur à 250 mm x 200 mm x 30 mm de préférence sensiblement égal à 350 mm x 300 mm x 40 mm.

3. Siège (12) d'un véhicule de transport selon l'une quelconque des revendications précédentes, dans lequel l'ouverture (32) d'accès à la cavité (34) est dimensionnée pour recevoir la table (24), la table (24) présentant une surface supérieure ou sensiblement égale à une surface de l'ouverture (32).

4. Siège (12) d'un véhicule de transport selon l'une quelconque des revendications précédentes, dans lequel le dossier (14), avantageusement la table du dossier, comprend un dispositif de commande d'un éclairage associé au siège.

5. Siège (12) d'un véhicule de transport selon l'une quelconque des revendications précédentes, dans lequel le dossier (14) comprend un dispositif d'éclairage (30) configuré pour s'allumer lorsque la table (24) se déplace de sa position repliée vers sa position déployée, le dispositif d'éclairage étant avantageusement positionné en partie supérieure de la cavité.

6. Siège (12) d'un véhicule de transport selon l'une quelconque des revendications précédentes, dans lequel la table (24) comprend une première partie (40) montée articulée sur la deuxième surface (20) du dossier (14), la première partie (40) étant montée mobile en rotation selon un premier axe (A-A') par rapport à la deuxième surface (20), et une deuxième partie (42) montée articulée sur la première partie (40), la deuxième partie (42) étant montée mobile en rotation par rapport à la première partie (40), selon un deuxième axe (B-B') parallèle au premier axe (A-A').

7. Siège (12) d'un véhicule de transport selon la revendication 6, dans lequel la deuxième partie (42) définit une première face (44) et une deuxième face (46) opposée à la première face (44),
la deuxième partie (42) étant mobile en rotation entre une position dépliée, dans laquelle la première face (44) présente un angle sensiblement égal à 180° avec la première partie (40), et une position repliée, dans laquelle la première face (44) est en contact direct avec la première partie (40).

8. Véhicule de transport, comportant un siège (12) de transport selon l'une quelconque des revendications précédentes.

## Patentansprüche

1. Sitz (12) eines Transportfahrzeugs, umfassend eine Rückenlehne (14), die eine erste Fläche (18), die dazu bestimmt ist, den Rücken eines Passagiers aufzunehmen, und eine zweite Fläche (20) gegenüber der ersten Fläche (18) definiert, die zweite Fläche (20) umfassend eine Öffnung (32) für den Zugang zu mindestens einem Hohlraum (34), der zwischen der ersten Fläche (18) und der zweiten Fläche (20) ausgebildet ist,
die Rückenlehne (14) umfassend einen Tisch (24), der zwischen einer eingeklappten Position, in der der Tisch (24) die Öffnung (32) für den Zugang zu dem Hohlraum (34) verschließt, und einer ausgeklappten Position, in der die Öffnung (32) für den Zugang zu dem Hohlraum (34) frei ist, verstellbar ist,
die Rückenlehne (14) umfassend eine Verriegelungsvorrichtung (26), die zwischen einer verriegelten Konfiguration und einer entriegelten Konfiguration betätigt werden kann, wobei die Verriegelungsvorrichtung (26) konfiguriert ist, um in der verriegelten Konfiguration den Tisch (24) in seiner eingeklappten Position zu halten, in der ein Verstellen des Tischs (24) in seine ausgeklappte Position verhindert ist, und in der entriegelten Konfiguration ein Verstellen des Tischs (24) in seine ausgefahrene Position zuzulassen,
die Verriegelungsvorrichtung (26) umfassend eine Verriegelung, die betätigt werden kann, um die Verriegelungsvorrichtung (26) zwischen der verriegelten Konfiguration und der entriegelten Konfiguration zu betätigen,
**dadurch gekennzeichnet, dass** die Verriegelung eine digitale Verriegelung (38) ist, die durch einen Zahlencode betätigt werden kann, der einem entsprechenden Passagier zugewiesen ist,
die zweite Oberfläche (20) umfassend einen Rahmen (36), der unter der Öffnung (32) angeordnet ist, wobei die digitale Verriegelung (38) an dem Rahmen (36) angeordnet ist.

2. Sitz (12) eines Transportfahrzeugs nach Anspruch 1, wobei der Hohlraum (34) ein Volumen von mehr als 150 mm x 100 mm x 15 mm vorzugsweise mehr als 250 mm x 200 mm x 30 mm vorzugsweise im Wesentlichen gleich wie 350 mm x 300 mm x 40 mm aufweist.

3. Sitz (12) eines Transportfahrzeugs nach einem der vorherigen Ansprüche, wobei die Öffnung (32) für den Zugang zu dem Hohlraum (34) bemessen ist, um den Tisch (24) aufzunehmen, wobei der Tisch (24) eine Fläche aufweist, die größer als oder im Wesentlichen gleich wie eine Fläche der Öffnung (32) ist.

4. Sitz (12) eines Transportfahrzeugs nach einem der vorherigen Ansprüche, wobei die Rückenlehne (14), vorteilhafterweise der Tisch der Rückenlehne, eine Steuervorrichtung einer Beleuchtung umfasst, die mit dem Sitz assoziiert ist.

5. Sitz (12) eines Transportfahrzeugs nach einem der vorherigen Ansprüche, wobei die Rückenlehne (14) eine Beleuchtungsvorrichtung (30) umfasst, die konfiguriert ist, um aufzuleuchten, wenn der Tisch (24) aus seiner eingeklappten Position in seine ausgeklappte Position verstellt wird, wobei die Beleuchtungsvorrichtung vorteilhafterweise in dem oberen Abschnitt des Hohlraums positioniert ist.

6. Sitz (12) eines Transportfahrzeugs nach einem der vorherigen Ansprüche, der Tisch (24) umfassend einen ersten Abschnitt (40), der gelenkig an der zweiten Fläche (20) der Rückenlehne (14) montiert ist, wobei der erste Abschnitt (40) drehbeweglich um eine erste Achse (A-A') in Bezug auf die zweite Fläche (20) montiert ist, und einen zweiten Abschnitt (42), der gelenkig an dem ersten Abschnitt (40) montiert ist, wobei der zweite Abschnitt (42) in Bezug auf den ersten Abschnitt (40) gemäß einer zweiten Achse (B-B'), die parallel zu der ersten Achse (A-A') ist, drehbeweglich montiert ist.

7. Sitz (12) eines Transportfahrzeugs nach Anspruch 6, wobei der zweite Abschnitt (42) eine erste Seite (44) und eine zweite Seite (46) gegenüber der ersten Seite (44) definiert,
wobei der zweite Abschnitt (42) zwischen einer ausgeklappten Position, in der die erste Seite (44) einen Winkel von im Wesentlichen 180° mit dem ersten Abschnitt (40) aufweist, und einer eingeklappten Position, in der die erste Seite (44) in direktem Kontakt mit dem ersten Abschnitt (40) ist, drehbar ist.

8. Transportfahrzeug, umfassend einen Transportsitz (12) nach einem der vorherigen Ansprüche.

## Claims

1. A seat (12) for a transport vehicle, including a backrest (14) defining a first surface (18) intended to receive the back of a passenger and a second surface (20) opposite the first surface (18), the second surface (20) comprising an opening (32) for access to at least one cavity (34) arranged between the first surface (18) and the second surface (20),
the backrest (14) comprising a table (24) movable between a folded position in which the table (24) closes off the opening (32) for access to the cavity (34), and a deployed position in which the opening (32) for access to the cavity (34) is clear,
the backrest (14) comprising a locking device (26) operable between a locked configuration and an unlocked configuration, the locking device (26) being configured, in the locked configuration, to keep the table (24) in its folded position while preventing any movement of the table (24) toward its deployed position, and, in the unlocked configuration, to allow a movement of the table (24) toward its deployed position,
the locking device (26) comprising a lock that can be actuated in order to operate the locking device (26) between the locked configuration and the unlocked configuration,
**characterized in that** the lock is a digital lock (38), able to be actuated by a digital code assigned to a corresponding passenger,
the second surface (20) comprising a frame (36) arranged below the opening (32), the digital lock (38) being arranged on the frame (36).

2. The seat (12) of a transport vehicle according to any one of the preceding claims, wherein the cavity (34) has a volume greater than 150mm x 100mm x 15mm, preferably greater than 250mm x 200mm x 30mm, preferably substantially equal to 350mm x 300mm x 40mm.

3. The seat (12) of a transport vehicle according to any one of the preceding claims, wherein the opening (32) for access to the cavity (34) is dimensioned to receive the table (24), the table (24) having a surface greater than or substantially equal to a surface of the opening (32).

4. The seat (12) of a transport vehicle according to any one of the preceding claims, wherein the backrest (14), advantageously the table of the backrest, comprises a device for controlling a light associated with the seat.

5. The seat (12) of a transport vehicle according to any one of the preceding claims, wherein the backrest (14) comprises a light device (30) configured to turn on when the table (24) moves from its folded position toward its deployed position, the light device advantageously being positioned in the upper part of the cavity.

6. The seat (12) of a transport vehicle according to any one of the preceding claims, wherein the table (24) comprises a first part (40) mounted articulated on the second surface (20) of the backrest (14), the first part (40) being mounted rotatably along a first axis (A-A') relative to the second surface (20), and a second part (42) mounted articulated on the first part (40), the second part (42) being mounted rotatably relative to the first part (40), along a second axis (B-B') parallel to the first axis (A-A').

7. The seat (12) of a transport vehicle according to claim 6, wherein the second part (42) defines a first face (44) and a second face (46) opposite the first face (44),
the second part (42) being rotatable between an unfolded position, in which the first face (44) has an angle substantially equal to 180° with the first part (40), and a folded position, in which the first face (44) is in direct contact with the first part (40).

8. A transport vehicle, comprising a transport seat (12) according to any one of the preceding claims.
